(19) Europäisches Patentamt
European Patent Office
Office européen des brevets

(11) **EP 3 324 123 B1**

(12) **EUROPÄISCHE PATENTSCHRIFT**

(45) Veröffentlichungstag und Bekanntmachung des Hinweises auf die Patenterteilung:
**13.11.2019 Patentblatt 2019/46**

(51) Int Cl.:
*F24C 7/08* (2006.01)          *H05B 6/70* (2006.01)
*H05B 6/72* (2006.01)          *H05B 6/80* (2006.01)

(21) Anmeldenummer: **17197671.5**

(22) Anmeldetag: **23.10.2017**

(54) **VERFAHREN ZUM ERHITZEN EINER FLÜSSIGKEIT UNTER ERKENNUNG EINES SIEDEPUNKTES**

METHOD FOR HEATING A LIQUID WITH DETECTION OF THE BOILING POINT

PROCÉDÉ DE CHAUFFAGE D'UN LIQUIDE EN RECONNAISSANCE D'UN POINT D'ÉBULLITION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.11.2016 DE 102016122517**

(43) Veröffentlichungstag der Anmeldung:
**23.05.2018 Patentblatt 2018/21**

(73) Patentinhaber: **Miele & Cie. KG**
**33332 Gütersloh (DE)**

(72) Erfinder:
• **Schmull, Timo**
**33775 Versmold (DE)**
• **Sillmen, Ulrich**
**33332 Gütersloh (DE)**

(56) Entgegenhaltungen:
**EP-A1- 2 193 732        EP-A1- 2 983 453**
**WO-A2-2013/033330**

**Beschreibung**

Die vorliegende Erfindung betrifft ein Verfahren zum Erhitzen einer Flüssigkeit in einem Gerät mit einer Behandlungseinrichtung, welche mit einer dafür geeigneten Heizquelle ausgestattet ist, wobei das Verfahren eine Erkennung eines Siedepunktes der Flüssigkeit beinhaltet.

Beim Erhitzen von Flüssigkeiten mit einer Gareinrichtung ist es in der Regel sinnvoll, bei Erreichen der Siedepunkttemperatur die Wärmezufuhr entsprechend anzupassen. Ansonsten führt das weitere Beheizen zu keiner Temperaturerhöhung der Flüssigkeit, sondern lediglich zu Verlustenergie durch Verdampfungsenthalpie und damit zu einem schlechten Wirkungsgrad. Zudem tritt eine erhöhte Wrasenbildung auf und die Flüssigkeitsmenge reduziert sich in unerwünschter Weise. Es kann auch sinnvoll sein, beim Erkennen des Siedepunkts die Wärmezufuhr vollständig abzuschalten und/oder den Bediener des Geräts über das Erreichen des Siedepunkts zu informieren.

Im Stand der Technik sind daher Kochfelder bekannt geworden, die über eine Siedepunkterkennung verfügen. Beispielsweise erfolgt dazu eine Messung der vom Topfboden abgestrahlten Infrarotstrahlung. Es sind auch Kochfelder bekannt geworden, bei denen Körperschall gemessen wird, welcher sich aufgrund von aufsteigenden Dampfblasen während des Siedevorgangs ergibt.

Allerdings hat sich herausgestellt, dass derartige Siedepunkterkennungen nicht immer zuverlässig funktionieren. Somit kommt es beispielsweise vor, dass die Siedepunkterkennung bei einem ersten Topf zuverlässig arbeitet, bei einem zweiten Topf hingegen nicht.

Ein weiterer Nachteil der bekannten Systeme ist, dass diese nicht bzw. nicht ohne weiteres in Gargeräten mit Garräumen einsetzbar sind. Dabei ist eine Siedepunkterkennung jedoch gerade beim Erhitzen von Flüssigkeiten in geschlossenen Garräumen von großem Vorteil. Ohne eine Anpassung der Leistungszufuhr nach Erreichen des Siedepunktes kommt es im Garraum zu einer stark erhöhten Dampfbildung. Der Dampf führt zum Beschlagen von Garraumwänden und der Tür. Zudem bildet sich je nach Flüssigkeit auch zunehmend Wrasen, welcher sich als schwer zu reinigender Belag niederschlägt. In Garräumen muss die Lüftung daher auch immer an die maximal auftretende Wrasenbildung angepasst werden. Ein weiterer Nachteil ist, dass sich Gefäße, wie zum Beispiel Tassen, weiter unnötig erwärmen und ohne Schutz nicht mehr mit der Hand angefasst werden können.

Die WO 2013/033330 A2 beschreibt ein Verfahren zum Ermitteln eines Prozessstatus eines Objektes in einer Behandlungszone. Dabei wird das Objekt während des Prozesses mit RF-Energie beaufschlagt und die reflektierte RF-Energie zur Ermittlung des Prozessstatus ausgewertet. Als Prozessstatus ist auch eine Phasenänderung beim Auftauen eines gefrorenen Objektes erwähnt.

In der EP 2 983 453 A1 ist ein Verfahren zum Betreiben eines Hausgerätes beschrieben, bei dem ein Messsystem elektromagnetische Messstrahlung erzeugt, dieses in einen Behandlungsraum des Gerätes einbringt und aus der vom Behandlungsgut reflektierten Messstrahlung anhand einer Veränderung der Welleneigenschaft eine charakteristische Kenngröße des Behandlungsgut ermittelt. Charakteristische Kenngrößen können die äußere Kontur, die Temperaturverteilung, die Feuchteverteilung, die Materialzusammensetzung, die Dichteverteilung und andere Parameter sein.

Ein aus der EP 2 193 732 A1 bekanntes Kochfeld benutzt Ultraschallwellen, die auf einen Topf ausgesendet, von diesem reflektiert und dann ausgewertet werden. Aus den Phasen- und Amplitudenänderungen wird ein Siedepunkt einer im Topf vorhandenen Flüssigkeit ermittelt.

Es ist daher die Aufgabe der vorliegenden Erfindung, ein Verfahren zum Betreiben einer Gareinrichtung sowie eine Gareinrichtung zur Verfügung zu stellen, die eine zuverlässige Siedepunkterkennung ermöglichen. Insbesondere soll die Siedepunkterkennung auch in geschlossenen Garräumen einsetzbar sein.

Diese Aufgabe wird gelöst durch ein Verfahren mit den Merkmalen des Anspruchs 1. Bevorzugte Merkmale sind Gegenstand der Unteransprüche. Weitere Vorteile und Merkmale ergeben sich aus der allgemeinen Beschreibung der Erfindung und der Beschreibung der Ausführungsbeispiele.

Das erfindungsgemäße Verfahren dient zum Erhitzen einer Flüssigkeit in einem Gerät. Die Flüssigkeit wird mit wenigstens einer Behandlungseinrichtung erhitzt, welche mit einer dafür geeigneten Heizquelle ausgestattet ist. Dabei wird zur Siedepunkterkennung mit einem Messsystem hochfrequente Messstrahlung zu der Flüssigkeit bzw. in den mit einer Flüssigkeit beladenen Garraum ausgesendet und wieder empfangen, aus einem Vergleich der gesendeten mit der empfangenen Messstrahlung ein Streuparameter berechnet, in mindestens zwei Messungen der zeitliche Verlauf eines Streuparameters bestimmt und aus dem zeitlichen Verlauf des Streuparameters wenigstens ein Wert für eine zeitliche Veränderung des Streuparameters bestimmt und ausgewertet. Ein Siedepunkt wird erkannt, wenn der Wert für die zeitliche Veränderung des Streuparameters einen vorgegebenen Wert überschreitet.

Das erfindungsgemäße Verfahren hat viele Vorteile. Ein erheblicher Vorteil ist, dass die Siedepunkterkennung anhand der Siedebewegungen erfolgt, welche mittels einer oder mehrerer Hochfrequenzmessungen erfasst werden. Solche Hochfrequenzmessungen sind sehr unaufwendig und zuverlässig sowohl auf Kochfeldern als auch in geschlossenen Garräumen und beispielsweise bei Mikrowellengeräten oder Backöfen durchführbar. Da die Siedebewegungen am Siedepunkt zuverlässig auftreten und über den Streuparameter auch sehr zuverlässig messbar sind, ist mit dem Verfahren eine besonders verlässliche Siedepunkterkennung möglich. Ein besonderer Vorteil besteht darin, dass zur Erkennung des Siedepunkts hochfrequente Strahlung eingesetzt werden kann, die auch zum Erhitzen der Flüssigkeit verwendet wird, insbesondere in einem Mikrowellengerät. Die Messstrahlung kann dann eine wesentlich geringere Leistung besitzen als die Strahlung, die zum dielektrischen Erhitzen eingesetzt wird. Die Leistung der Messstrahlung kann auch direkt zum Sieden und/oder Erwärmen der Flüssigkeit beitragen und/oder auch alleinig für die Erwärmung sorgen.

In einer ersten möglichen Ausgestaltung des erfindungsgemäßen Verfahrens wird der zeitliche Verlauf des Streuparameters über wenigstens eine Messphase erfasst, deren Dauer um ein Vielfaches länger ist als eine Geometrieänderung der Flüssigkeit, die durch eine beim Sieden aufsteigende Blase verursacht wird, sodass während der Messphase eine Vielzahl von siedebedingten Geometrieänderungen erfassbar sind. Dadurch sind während der Messphase eine Vielzahl von Geometrieänderungen erfassbar. Beispielsweise kann eine solche Messphase eine Dauer von wenigstens einer Sekunde und insbesondere von wenigstens zwei oder drei oder vorzugsweise mehreren Sekunden aufweisen. Bevorzugt weist eine solche Messphase eine Dauer von fünf und besonders bevorzugt von 6 Sekunden auf. Möglich sind auch Messphasen mit einer Dauer von zehn oder mehr Sekunden. Solche Messphasen haben den Vorteil, dass der zeitliche Verlauf des Streuparameters durch zahlreiche Geometrieänderungen der Flüssigkeit geprägt ist, sodass die Siedebewegungen anhand des Streuparameters besonders zuverlässig erkannt werden können.

Die Messstrahlung durchläuft vorzugsweise in einer Messphase wenigstens ein Frequenzband mit einer Mehrzahl unterscheidbarer Frequenzen. Der Streuparameter wird dabei insbesondere in der Messphase als Funktion der Frequenz registriert. Vorzugsweise wird dann ein von einem stetigen Funktionsverlauf abweichender Funktionsverlauf des Streuparameters als ein Indiz für die Erkennung des Siedepunktes herangezogen. So kann der Siedepunkt sehr zuverlässig erkannt werden, da der Funktionsverlauf des Streuparameters als Funktion der Frequenz in der Regel zahlreiche charakteristische Veränderungen und beispielsweise Sprünge bzw. Zacken aufweist, wenn Siedebewegungen während der Messphase auftreten. Der charakteristisch veränderte Funktionsverlauf als Bedingung für die Erkennung des Siedepunktes wird insbesondere im Rahmen einer Kurvendiskussion bzw. anhand der für eine Funktionsanalyse üblichen Rechenoperationen erkannt.

In einer zweiten möglichen Ausgestaltung des Verfahrens wird der zeitliche Verlauf des Streuparameters über wenigstens zwei zeitversetzte Messphasen erfasst, deren Dauer jeweils gleich lang oder kürzer ist als eine Geometrieänderung der Flüssigkeit, die durch eine beim Sieden aufsteigende Blase verursacht wird. Aufgrund der kurzen Dauer einer Messphase ist dann höchstens eine siedebedingte Geometrieänderung erfassbar. Beispielsweise liegt die Dauer der Messphase im Bereich von weniger als einer Sekunde und vorzugsweise im Bereich von Millisekunden oder Mikrosekunden oder auch Nanosekunden. Insbesondere ist es vorteilhaft, wenn die Messstrahlung in den Messphasen jeweils wenigstens ein Frequenzband mit einer Mehrzahl unterscheidbarer Frequenzen durchläuft. Der Streuparameter wird in den Messphasen als Funktion der Frequenz registriert und wenigstens eine charakteristische Abweichung der Streuparameter wird zu festgesetzten Frequenzen in den wenigstens zwei zeitversetzten Messphasen als ein Indiz für die Erkennung des Siedepunktes herangezogen. Es ist möglich, dass die Messphase eine Dauer aufweist, welche zum Senden und/oder Empfangen eines ultrakurzen Pulses zur Erzeugung von ultrabreitbandigen Signalen ausgelegt ist. Der Unterschied zu der weiter oben beschriebenen ersten Ausgestaltung des Verfahrens besteht darin, dass hier der zeitabhängige Funktionsverlauf aus mindestens zwei Messphasen miteinander verglichen wird. Man kommt dadurch zu einfacheren Rechenoperationen, beispielsweise kann die charakteristische Abweichung der Funktionsverläufe durch wenigstens eine Differenz der Beträge der Streuparameter der jeweiligen Messphasen bestimmt werden. Insbesondere werden dabei Differenzen als Bedingung für die Erkennung des Siedepunktes herangezogen, welche oberhalb eines Rauschverhaltens des Messsystems liegen. Besonders bevorzugt wird der Frequenzverlauf des Streuparameters dazu in der komplexen Ebene betrachtet. Durch eine solche Auswertung kann der Siedepunkt sicher festgelegt werden, sobald Siedebewegungen auftreten. Zudem ist eine solche Auswertung mit einer technisch unaufwändigen und somit wirtschaftlichen Hochfrequenzsensorik möglich. Es ist möglich, dass für die beiden Messphasen der Streuparameter an gegenläufigen Toren eines Zweitors oder Mehrtors in Transmission und/oder Reflexion zeitversetzt erfasst wird. Ein solches Messsystem ermöglicht eine wirtschaftliche Erfassung des Streuparameters während verschiedener Messphasen und eignet sich besonders gut für eine Anordnung in einem Garraum.

In einer dritten möglichen Ausgestaltung des Verfahrens wird der zeitabhängige Verlauf des Streuparameters bei wenigstens einer konstanten Frequenz erfasst. Dabei wird eine erhöhte Änderungsrate des Streuparameters als ein Indiz für die Erkennung des Siedepunktes herangezogen. Die erhöhte Änderungsrate kann durch eine statistische Analyse oder eine Kurvenbetrachtung des zeitabhängigen Verlaufs des Streuparameters ermittelt werden. Die Erfassung des Streuparameters bei einer konstanten Frequenz kann technisch besonders wirtschaftlich umgesetzt werden und bietet sehr verlässliche Messergebnisse. Vorzugsweise wird die Messstrahlung mit einer konstanten Frequenz ausgesendet.

In einer vorteilhaften Ausführungsform des Verfahrens wird die Behandlungseinrichtung in Abhängigkeit wenigstens eines Behandlungsprogramms durch wenigstens eine Steuereinrichtung gesteuert. Die Erkennung des Siedepunktes wird dann der Steuereinrichtung mitgeteilt, sodass das Behandlungsprogramm unter Berücksichtigung des Siedepunktes angepasst werden kann. Alternativ ist es möglich, den Bediener über eine optische oder akustische Anzeige über den Siedezustand zu unterrichten.

Im Rahmen der vorliegenden Erfindung wird unter dem Begriff Steuern vorzugsweise auch ein Regeln verstanden.

Weitere Vorteile und Merkmale der vorliegenden Erfindung ergeben sich aus dem Ausführungsbeispiel, welches im Folgenden mit Bezug auf die beiliegenden Figuren erläutert wird.

In den Figuren zeigen:

Figur 1          eine stark schematische Darstellung einer Gareinrichtung;

Figur 2          eine stark schematische Darstellung von Funktionsverläufen verschiedener Streuparameter für Wasser unterhalb der Siedetemperatur; und

Figur 3 bis 6    eine stark schematische Darstellung von Funktionsverläufen verschiedener Streuparameter für siedendes Wasser.

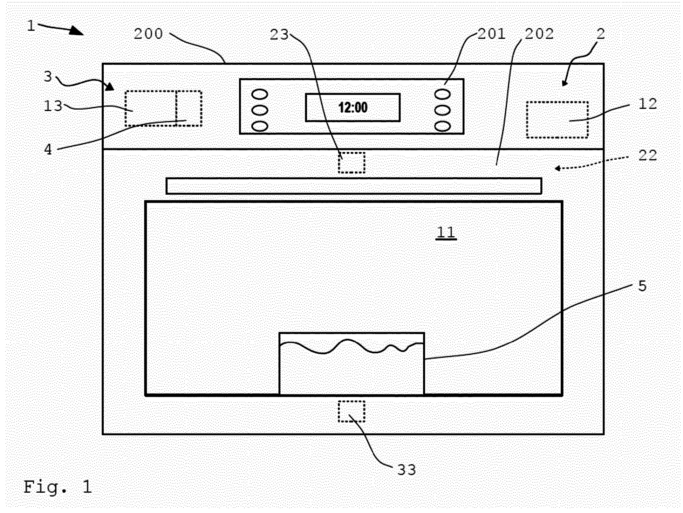

Die Figur 1 zeigt ein Gerät, hier als Gargerät 1, insbesondere als ein Backofen 200 ausgebildet, welches zur Durchführung des erfindungsgemäßen Verfahrens geeignet ist. Selbstverständlich kann das erfindungsgemäße Verfahren auch in anderen Geräten (Wasserkochern, Kochfeld etc.), insbesondere auch in anderen Gargeräten (Dampfgarern, Mikrowellengeräten, Reiskochern etc.) durchgeführt werden.

Der Backofen 200 hat einen Garraum 11, welcher durch eine Tür 202 verschließbar ist. Im Garraum 11 befindet sich ein Behälter 5 mit Wasser oder einer wässrigen Flüssigkeit, z. B. Suppe, Milch, Kakao, Puddingpulver-Milch-Mischung oder Öl. Abgestellt ist der Behälter 5 auf einer hier nicht sichtbaren Gargutträgeraufnahme.

Der Backofen 200 ist hier als ein Einbaugerät vorgesehen. Möglich ist auch, dass er als ein Herd bzw. Standgerät ausgebildet ist.

Zur Zubereitung von Gargut und zum Erwärmen von Flüssigkeit ist eine Behandlungseinrichtung 2 vorgesehen. Die Behandlungseinrichtung 2 umfasst eine oder mehrere thermische Heizquellen 22, die in der hier dargestellten Ansicht nicht sichtbar im Garraum 11 bzw. Geräteinneren angeordnet sind. Möglich ist unter anderem das Beheizen des Garraums 11 mit einer Umluftheizquelle, mit Ober- und Unterhitze, im Heißluftbetrieb und/oder mit einer Grillfunktion.

Besonders bevorzugt ist eine Ausgestaltung des Backofens 200 als ein Kombigerät mit einer Backofen- und Mikrowellenfunktion. Dazu umfasst die Behandlungseinrichtung 2 neben der Heizquelle 22 auch einen Hochfrequenzerzeuger 12 zur Erzeugung von hochfrequenter Behandlungsstrahlung zur dielektrischen Erwärmung des Garguts. Die Gareinrichtung 1 kann auch nur mit einer Mikrowellenfunktion bzw. nur zur dielektrischen Erwärmung des Garguts und ohne eine Heizquelle 22 ausgestattet sein. Es kann auch eine Dampfgarfunktion vorgesehen sein.

Der Backofen 200 umfasst hier eine Steuereinrichtung 4 zur Steuerung bzw. Regelung der Behandlungseinrichtung 2 sowie weiterer vorgesehener Gerätefunktionen. Mittels der Steuereinrichtung 4 wird beispielsweise die Heizleistung der Heizquellen so eingestellt, dass im Garraum 11 Temperaturen vorliegen, welche im Bereich einer geforderten Solltemperatur liegen. Auch der Hochfrequenzerzeuger 12 wird über die Steuereinrichtung 4 gesteuert. Über die Steuereinrichtung 4 sind zudem verschiedene Betriebsarten und vorzugsweise verschiedene Behandlungsprogramme mit Automatikfunktionen ausführbar.

Der Backofen 200 ist hier über eine Bedieneinrichtung 201 bedienbar. Beispielsweise kann darüber die Betriebsart, die Betriebstemperatur und/oder ein Behandlungsprogramm bzw. eine Automatikfunktion ausgewählt und eingestellt werden. Die Bedieneinrichtung 201 umfasst hier eine Anzeigeeinrichtung, über die dem Benutzer Informationen über den Betriebsablauf und den Garvorgang angezeigt werden. Über die Bedieneinrichtung 201 kann der Benutzer auch Eingaben vornehmen, beispielsweise um Informationen über das Gargut in der Gareinrichtung 1 zu hinterlegen. Die Bedieneinrichtung 201 kann dazu eine oder mehrere Tasten aufweisen und/oder als eine berührungsempfindliche Oberfläche bzw. Touchscreen ausgestaltet sein.

Der Backofen 200 weist ein hier stark schematisiert dargestelltes Messsystem 3 auf. Das Messsystem 3 ist zur berührungslosen Siedepunkterkennung für eine im Garraum 11 aufgenommene Flüssigkeit vorgesehen. Das Messsystem 3 umfasst hier einen vereinfachten, für die Messaufgabe angepassten Netzwerkanalysator 13 mit zwei Antennen 23, 33 zum Senden und/oder Empfangen von Hochfrequenzstrahlung. Die Strahlung liegt im Bereich eines ISM-Bandes, bei 900 MHz oder bei 2,45 GHz. Es können auch drei oder mehr Antennen 23, 33 vorgesehen sein. Für einige Ausführungsformen des erfindungsgemäßen Verfahrens reicht es auch aus, wenn das Messsystem 3 nur mit einer Antenne 23 oder 33 zum Senden und Empfangen der Hochfrequenzstrahlung ausgestattet ist.

In einer besonders vorteilhaften Ausführungsform wird bei dem Backofen für das Messsystem 3 der gleiche Hochfrequenzerzeuger 12 benutzt, der auch zur dielektrischen Erwärmung vorgesehen ist. Umgekehrt erfolgt auch die Einstrahlung der hochfrequenten Behandlungsstrahlung in den Garraum 11 zur dielektrischen Erwärmung über die Antennen 23 und/oder 33. Der Unterschied zwischen dem Messprozess und dem Erwärmungsprozess besteht darin, dass zum Messen eine Hochfrequenzstrahlung mit wesentlich geringerer Leistung eingesetzt werden kann. Es ist aber auch denkbar, dass die Leistung der Messstrahlung so hoch ist, dass sie zu einer deutlichen dielektrischen Erwärmung der Flüssigkeit sorgt. Es ist sogar denkbar, dass die Sendeleistung für das Messen einstellbar ist. Es ist denkbar, dass Mess- und Kochphase (dielektrische Erwärmphase) ein und dasselbe sind.

Die Messungen bzw. die Netzwerkanalyse erfolgen hier in Reflexion und/oder Transmission, je nachdem, ob eine oder mehrere Antennen eingesetzt werden. Der Netzwerkanalysator 13 kann als ein Eintor-System oder als Mehrtor-System ausgebildet sein. Über eine oder mehrere Antennen 23, 33 wird die Hochfrequenzstrahlung in den Garraum 11 gesendet. Die reflektierte und/oder transmittierte Messstrahlung wird über eine bzw. mehrere Antennen 23, 33 wieder empfangen.

Der Netzwerkanalysator 13 erfasst dabei wenigstens eine charakteristische Welleneigenschaft der Messstrahlung, beispielsweise die Amplitude, Frequenz und/oder Phase. Anhand eines Vergleichs der empfangenen mit der ausgesendeten Messstrahlung wird wenigstens ein Streuparameter erfasst. Der Streuparameter gibt bei einer bestimmten Frequenz ein Verhältnis von empfangender Welle zu gesendeter Welle an. Ein möglicher Streuparameter ist die Reflektion

$$\Gamma^2 = \frac{P_{refl}}{P_{send}}.$$

Die Siedepunkterkennung erfolgt dadurch, dass die zeitliche Veränderung des Streuparameters bzw. einer daraus ableitbaren Größe typische Siedebewegungen der Flüssigkeit erkennen lässt. Die Bewegungen der Flüssigkeit werden durch aufsteigende Blasen hervorgerufen. Durch die Bewegungen kommt es zu Geometrieänderungen der Flüssigkeit und insbesondere der Flüssigkeitsoberfläche. Zum Zeitpunkt des Siedens ändert sich die Gesamtgeometrie der Flüssigkeit somit sehr schnell und häufig. Diese Geometrieänderungen führen zu typischen Veränderungen des Streuparameterverlaufs. Das Auftreten bestimmter Verlaufsänderungen des Streuparameters zeigt daher zuverlässig den Siedepunkt an. Es führen zwar auch andere Phänomene zu einer Veränderung des Streuparameters, beispielsweise die Änderung des Gesamtvolumens durch geringfügige Verdampfung, die Änderung der Permittivität der Flüssigkeit durch Erwärmung und Wasserentzug, diese Veränderung ist jedoch sehr langsam und außerdem stetig. Insofern kann sie von den Veränderungen beim Erreichen des Siedepunkts sehr gut unterschieden werden.

Nachfolgend wird mit Bezug auf verschiedene Ausgestaltungen des erfindungsgemäßen Verfahrens beispielhaft beschrieben, wie die zeitliche Veränderung des Streuparameters erfasst, ausgewertet und zur Siedepunkterkennung herangezogen wird.

In einer ersten Ausgestaltung wird der zeitliche Verlauf des Streuparameters über wenigstens eine Messphase erfasst, deren Dauer um ein Vielfaches länger ist als eine Geometrieänderung der Flüssigkeit, die durch eine beim Sieden aufsteigende Blase verursacht wird, sodass während der Messphase eine Vielzahl von siedebedingten Geometrieänderungen erfassbar sind. Dadurch werden im Grunde verschiedene Geometrien der Flüssigkeit während einer Messphase gemessen.

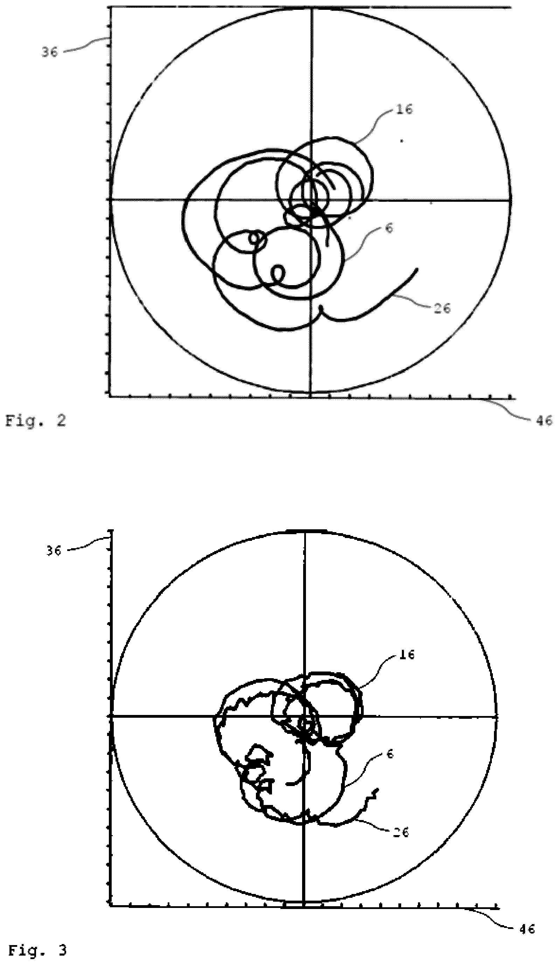

In den Figuren 2 und 3 sind Beispiele von verschiedenen Streuparameterverläufen für ein Messsystem 3 mit zwei Antennen 23, 33 gezeigt, wobei jeweils der Imaginärteil 36 gegen den Realteil 46 der Streuparameter aufgetragen ist. Dabei wurde die Messfrequenz innerhalb des ISM-Bandes von 2,4 GHz bis 2,5 GHz mit einer Abtastfrequenz von 1 MHz variiert. Das ergibt 101 Frequenzen bzw. Messpunkte. Die Streuparameter enthalten eine Amplitudeninformation und eine Phaseninformation. Sie sind komplexwertig. Eine besonders vorteilhafte Darstellungsweise ist die Darstellung der Amplitude oder Phase über die Frequenz. Die Darstellung in der komplexen Ebene ist ebenfalls sehr vorteilhaft. Ein Vorteil besteht darin, dass sowohl Phasen- als auch Betragsänderungen, die durch Geometrieänderungen des Wassers hervorgerufen werden, in einem Diagramm darstellbar sind.

Kurve 6 zeigt den Streuparameterverlauf S11, d. h., die Reflexion an der Antenne 23. Kurve 16 zeigt den Verlauf des Streuparameters S12, d. h., der Transmission von der Antenne 23 zur Antenne 23. Dieser ist bei reziproken Systemen, also Systemen ohne richtungsabhängige Bauteile, im Übrigen identisch zum Streuparameter S21 und wird aus diesem Grund nur als eine Kurve 16 dargestellt. Kurve 26 zeigt den Streuparameterverlauf S22, d. h., die Reflexion an der Antenne 33. Die Messdaten wurden in einer beispielhaften Messung beim Erwärmen eines halben Liters Wasser erfasst. Die den Streuparameterverläufen 6, 16, 26 zugrundeliegenden Messungen sind während einer Messphase von sechs Sekunden Dauer erfasst worden. Die Messphase ist damit deutlich länger als die Geometrieänderungen, die durch das Aufsteigen der Blasen an die Oberfläche des Wassers entstehen.

Die Figur 2 zeigt Streuparameterverläufe 6, 16, 26, welche unterhalb der Siedetemperatur erfasst wurden. Die Figur 3 hingegen zeigt Streuparameterverläufe 6, 16, 26, welche bei Siedetemperatur erfasst wurden.

Vor Erreichen des Siedepunktes ergeben die Streuparameter als Ortskurve der Frequenz in der komplexen Ebene stetige, glatte Kurvenverläufe. Diese Kurvenverläufe lassen in der Regel keine "Zacken" oder "Ecken" erkennen. Wenn jedoch die Flüssigkeit ihren Siedepunkt erreicht hat, so gibt es innerhalb des Graphen Sprünge, Zacken und Ecken. Diese werden durch das Messsystem 3 erkannt und so das Erreichen des Siedepunktes festgestellt.

Ein Vergleich der Streuparameterverläufe 6, 16, 26 der Figuren 2 und 3 in der komplexen Ebene lässt die zeitliche Veränderung des Streuparameters besonders gut erkennen, welche charakteristisch für Siedebewegungen bzw. für aufsteigende Blasen sind. Die Streuparameterverläufe 6, 16, 26 der Figur 3 weisen hier ein signifikantes Rauschen gegenüber den Streuparameterverläufen 6, 16, 26 der Figur 2 auf.

Während die Verläufe 6, 16, 26 unterhalb des Siedepunktes glatt sind, ergibt sich bei 100 °C ein sehr verrauschter bzw. stark gezackter Graph. Genau diese zahlreichen Verlaufsänderungen bzw. die Stärke des Rauschens werden im erfindungsgemäßen Verfahren ausgewertet und als Bewegung der Flüssigkeitsoberfläche interpretiert.

Dabei wird ein starkes Rauschen bzw. ein Rauschen oberhalb eines Schwellenwertes als Sieden aufgefasst. Ein entsprechend schwaches Rauschen wird vorzugsweise als ein schwaches Sieden aufgefasst. Bei einem vernachlässigbaren Rauschen oder einem Rauschen unterhalb eines Schwellenwertes wird von einer Flüssigkeit unterhalb des Siedepunktes ausgegangen.

In einer vorteilhaften Auswertung kann das Rauschen als Skalar betrachtet werden. Beispielsweise kann zwischen jedem Messpunkt und seinem um 1 MHz verschobenen Nachbarn die Differenz als komplexe Zahl berechnet werden. Dies ist praktisch in diesem Fall der komplexe Abstand von einem Messpunkt zum nächsten. Dieser komplexe Abstand ist wiederum eine Funktion über die Frequenz bzw. eine Ortskurve mit Laufparameter Frequenz in der komplexen Ebene. Ist der Graph stetig, so sind zwei benachbarte komplexe Abstände ähnlich ausgerichtet (z. B. ähnliche Betrag und ähnlicher Winkel). Ihr Unterschied ist also klein. Bei unstetigen Graphen und somit beim Siedepunkt der Flüssigkeit sind diese Abstände vollkommen verschieden ausgerichtet. Dieser Unterschied der komplexen Differenz kann aufsummiert werden und steht somit als Skalar zur Verfügung. Dieser Skalar kann mit einem Referenzwert oder dem Anfangswert für die Beladung verglichen werden, um den Siedepunkt bzw. die sehr schnelle Geometrieänderung zu erkennen.

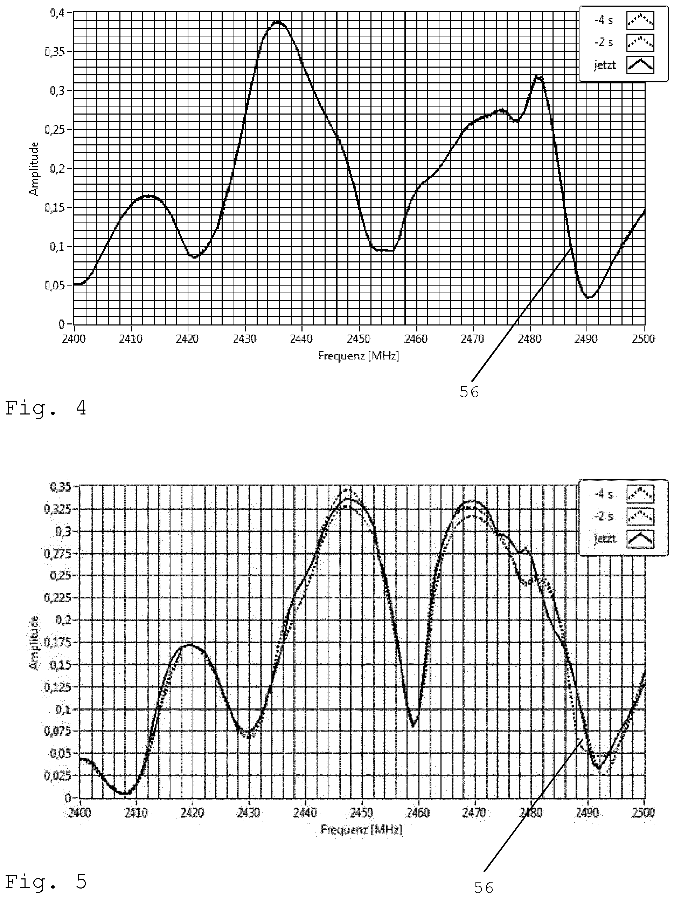

In einer zweiten Ausgestaltung des erfindungsgemäßen Verfahrens ist die Dauer einer Messphase kleiner oder ähnlich wie die Dauer der Geometrieänderung durch das Sieden. In diesem Fall wird nicht ein einzelner Messvorgang ausgewertet, sondern zwei oder mehr zeitlich versetzte Messpunkte miteinander verglichen. Die Figuren 4 und 5 zeigen ein Beispiel eines Streuparameterverlaufs in drei Messphasen, die jeweils um zwei Sekunden versetzt sind. Dabei wurde jeweils in kurzer Zeit von 20 ms die Messfrequenz innerhalb des ISM-Bandes von 2,4 GHz bis 2,5 GHz mit einer Abtastfrequenz von 1 MHz variiert. Gemessen wurde die Reflexion 56

$$\Gamma^2 = \frac{P_{refl}}{P_{send}}$$

für jede Frequenz. Figur 4 zeigt den frequenzabhängigen Verlauf des Streuparameters Reflexion 56 (S11), wenn die Temperatur der Flüssigkeit unterhalb der Siedetemperatur liegt. Es ist gut erkennbar, dass die Streuparameter, die für jede Frequenz zu unterschiedlichen Zeiten aufgenommen wurden, nahezu identisch sind. Im Gegensatz dazu ist bei den Kurven nach Figur 5, bei denen die Flüssigkeit siedet, erkennbar, dass die Kurven für die unterschiedlichen Messphasen nicht mehr übereinstimmen. Die Streuparameter weisen zumindest in einigen Frequenzbereichen charakteristische Abweichungen auf. Diese resultieren aus den siedebedingten Geometrieänderungen der Flüssigkeitsoberfläche, die sich von einer Messphase zur nächsten ergeben haben. Die Abweichungen können relativ einfach ermittelt werden, indem für mehrere, vorzugsweise für alle Frequenzen die Differenzen der Beträge der Streuparameter in den jeweiligen Messphasen bestimmt werden. Überschreiten die Differenzen einen Schwellwert, so wird ein Sieden erkannt.

Eine andere Möglichkeit, die zeitliche Veränderung des Streuparameters zu erfassen, auszuwerten und zur Siedepunkterkennung heranzuziehen, ist eine zeitversetzte Erfassung eines Streuparameters in zwei oder mehr Messphasen. Ein üblicher Messvorgang für ein Mehrtor (also mehr als ein Tor bzw. eine Antenne bzw. Einkopplung) besteht dann daraus, dass immer ein Kanal sendet, während alle anderen Kanäle empfangen. Es sendet also zum Beispiel einmal Kanal 1 und Kanal 2 empfängt und umgekehrt. Die Transmission von 1 in 2 bzw. von 2 in 1 ist identisch und wird bei dieser Prozedur zweimal gemessen. Wenn diese beiden Messungen genügend zeitlich versetzt sind, dann kann ein einzelner schneller Messvorgang aufgrund der Doppelmessung der Transmissions-Streuparameter (S12 gleich S21) für die Siedepunkterkennung vorteilhaft verwendet werden. Auch für diese Ausgestaltung erfolgt die weitere Auswertung der erfassten Streuparameter, wie für die Ausgestaltungen zuvor beschrieben.

Eine vierte Möglichkeit, die zeitliche Veränderung eines Streuparameters zu erfassen, auszuwerten und zu Siedepunkterkennung heranzuziehen basiert auf einer Messung eines Streuparameters im Garraum 11 bei einer konstanten Frequenz. Die Frequenz ist beliebig, sollte allerdings vorzugsweise im Bereich eines ISM-Bandes bei 900 MHz oder bei 2,45 GHz liegen.

Wenn man nur detektiert kann die Frequenz auch außerhalb des ISM bandes liegen. In dem Fall würde man Chips mit einer Sendeleistung von 10dBm wählen (10mW), um die Kosten gering zu halten. Wenn die Sendeleistung auch zur dielektrischen Erwärmung dienen soll, dann sollte vorzugsweise in den ISM-Bändern gearbeitet werden. Besonders bevorzugt sind dabei die ISM-Bänder, bei denen die Wellenlänge ähnlich (Faktor 0,1 bis Faktor 10) zu den Garraumabmaßen ist. In handelsüblichen Gargeräten entspricht dieser Frequenz dem 2,4 GHz ISM-Band. Ein Vorteil der hohen Sendeleistung zur gleichzeitigen dielektrischen Erwärmung des Garguts ist ein vereinfachter Ablauf der Steuerung, da Mess- und Kochphase ein und dasselbe sind.

Gemessen wird wieder die Reflexion 66

$$\Gamma^2 = \frac{P_{refl}}{P_{send}}$$

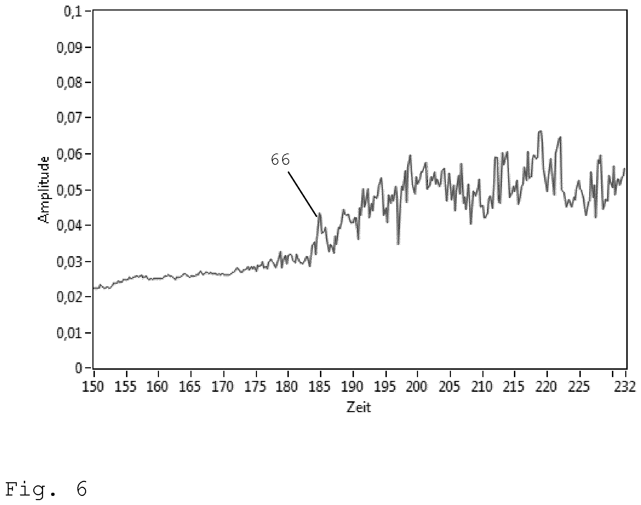

Die Figur 6 zeigt die gemessenen Reflexionswerte bei einem Kochvorgang von 150 ml Wasser und einer Messfrequenz von 2,46 GHz, die Sendeleistung beträgt 250 Watt, da die Sendeleistung in diesem Fall auch als einzige Heizquelle das Wasser erwärmt. Die Messleistung sorgt für dielektrische Verlustleistung in der Last. Es sind keine Heizkörper aktiv. Es ist erkennbar, dass die Reflexion 66 zunächst im Bereich von 150 Sekunden bis 170 Sekunden (kurz vor dem Einsetzen des Siedens) nur geringfügig ansteigt und die zeitliche Änderung des Signals nur gering ist. Das ist durch erhöhte Dampfentwicklung bei Temperaturen nahe des Siedepunktes zu erklären. Mit dem Einsetzen des Siedens nach ca. 175 Sekunden ändert sich das. Wenn die Oberfläche durch den Siedevorgang schnell ihre Geometrie ändert, wird dieses Verhalten zu einer erhöhten Änderungsrate des Streuparameters, hier der Reflexion 66, führen. Die erhöhte Änderungsrate kann durch eine statistische Analyse (bspw. Häufigkeit des Vorzeichenwechsels der Signalsteigung) oder eine Kurvenbetrachtung des zeitabhängigen Verlaufs des Streuparameters ermittelt werden.

Nach der erfolgten Erkennung des Siedepunktes wird vorzugsweise eine Anpassung der Behandlungseinrichtung bzw. eine Anpassung eines Behandlungsprogramms vorgenommen. Beispielsweise wird nach einer Siedepunkterkennung die Leistung eines Hochfrequenzerzeugers zur dielektrischen Erwärmung von Gargut reduziert oder ausgeschaltet. Nach der Siedepunkterkennung kann auch ein Sieden oder Kochen mit verschiedener Intensität fortgesetzt werden. Beispielsweise ist ein stilles Sieden bis hin zu intensivem Kochen möglich. Die Intensität und/oder dauer des Garvorgangs nach der Siedepunkterkennung kann beispielsweise in der Steuereinrichtung 4 hinterlegt oder auch vom Benutzer zusammen mit einer Dauer vorgegeben werden.

Aufgrund einer Siedepunkterkennung ist auch eine Meldung an den Benutzer möglich. Beispielsweise kann eine akustische und/oder optische Anzeige erfolgen. Die Meldung kann auch über ein Smartphone an den Benutzer gesendet werden. Solche Benachrichtigungen sind beispielsweise beim Aufkochen von Teewasser oder bei der Zubereitung von Nudeln von großem Vorteil.

Möglich ist auch, dass aufgrund der Siedepunkterkennung eine dynamische Lüfteransteuerung erfolgt, sodass beispielsweise eine maximale Garraumdurchspülung im Siedepunkt erreicht wird. Außerhalb des Siedepunktes erfolgt vorzugsweise eine verringerte Garraumdurchspülung.

Es kann auch ein Umschalten von Ankochen mit hoher oder maximaler Leistung auf Fortkochen mit reduzierter bzw. vom Benutzer gewünschter Intensität bei Erreichen des Siedepunktes erfolgen. Möglich ist auch, dass bei Erreichen des Siedepunktes der Kochvorgang beendet wird. Nach einer erfolgten Siedepunkterkennung kann auch eine Warmhaltephase automatisch eingeleitet werden. Eine Warmhaltephase ist insbesondere durch eine entsprechend abgesenkte Heizleistung charakterisiert.

Das hier vorgestellte Verfahren zu Siedepunkterkennung und die vorgestellte Gareinrichtung 1 bieten eine erhebliche Verbesserung des Nutzerkomforts beim Erhitzen von Flüssigkeiten. Ohne eine zuverlässige Siedepunkterkennung ist für ein gleichmäßiges bzw. fortlaufend schonendes Sieden mit einer gewünschten Intensität (zum Beispiel stilles Sieden) sehr hohe Aufmerksamkeit von dem Benutzer gefragt. Oft muss der Benutzer zum Einhalten einer gewünschten Siedeintensität nahezu permanent am Herd stehen.

Die hier vorgestellte Siedeerkennung erleichtert besonders die Zubereitung von Speisen, welche eine bestimmte Siedeintensität oder Siededauer benötigen. So kann die hier vorgestellte Siedepunkterkennung z. B. bei einer programmgesteuerten Zubereitung von Knödeln bzw. Klößen sowie von Würstchen oder Gemüse oder pochierten Eiern oder auch bei Pasta erfolgen. Zudem ist eine Unterscheidung zwischen geräuschvollem und stillem Sieden anhand der hier vorgestellten Siedepunkterkennung möglich. Zudem kann ein Überkochen von Milch verhindert werden.

Durch das erfindungsgemäße Verfahren kann der Garvorgang anhand eines besonders zuverlässigen Hochfrequenzmessverfahrens auf einem gewünschten bzw. einstellbaren Siedeniveau gehalten werden. Das Hochfrequenzmessverfahren hat dabei den Vorteil, dass es auch bei unterschiedlichen Gargutbehältern bzw. Töpfen zuverlässig einsetzbar ist.

Ein besonderer Vorteil der hier vorgestellten Erfindung ist, dass eine Siedepunkterkennung nicht nur auf einem Kochfeld, sondern auch in einem beheizten Garraum möglich ist, z. B. in einem Mikrowellengargerät. Durch die Siedepunkterkennung im Garraum 11 kann der Ursache für Wrasenbildung entgegengewirkt und ein Überkochen von Flüssigkeiten, beispielsweise Milch, im Garraum 11 verhindert werden. Zudem kann Flüssigkeit in einem Garraum 11 kontrolliert erhitzt werden, ohne dass es zum Übersieden oder Untersieden kommt.

**Bezugszeichenliste**

| | |
|---|---|
| 1 | Gargerät |
| 2 | Behandlungseinrichtung |
| 3 | Messsystem |
| 4 | Steuereinrichtung |
| 5 | Behälter |

| | |
|---|---|
| 6 | Streuparameterverlauf |
| 11 | Garraum |
| 12 | Hochfrequenzerzeuger |
| 13 | Netzwerkanalysator |
| 16 | Streuparameterverlauf |
| 22 | Heizquelle |
| 23 | Antenne |
| 26 | Streuparameterverlauf |
| 33 | Antenne |
| 36 | Imaginärteil |
| 46 | Realteil |
| 56 | Reflexion |
| 66 | Reflexion |
| 200 | Backofen, Kombigerät |
| 201 | Bedieneinrichtung |
| 202 | Tür |

**Patentansprüche**

1. Verfahren zum Erhitzen einer Flüssigkeit in einem Gerät (1) mit einer Behandlungseinrichtung (2), welche mit einer dafür geeigneten Heizquelle (22) ausgestattet ist, wobei das Verfahren eine Erkennung eines Siedepunktes der Flüssigkeit beinhaltet, wobei

   - mit einem Messsystem (3) hochfrequente Messstrahlung im **Bereich eines ISM-Bandes bei 900 MHz oder bei 2,45 GHz** zu der Flüssigkeit und /oder zu einem teilweise mit Flüssigkeit beladenem Resonanzraum ausgesendet und wieder empfangen wird,
   - aus einem Vergleich der gesendeten mit der empfangenen Messstrahlung in mindestens zwei Messungen der zeitliche Verlauf eines Streuparameters bestimmt wird,
   - aus dem zeitlichen Verlauf des Streuparameters wenigstens ein Wert für eine zeitliche Veränderung des Streuparameters bestimmt und ausgewertet wird,
   - und wobei ein Siedepunkt erkannt wird, wenn der Wert für die zeitliche Veränderung des Streuparameters einen vorgegebenen Wert überschreitet.

2. Verfahren nach Anspruch 1, **dadurch gekennzeichnet, dass** der zeitliche Verlauf des Streuparameters über wenigstens eine Messphase erfasst wird, deren Dauer um ein Vielfaches länger ist als eine Geometrieänderung der Flüssigkeit, die durch eine beim Sieden aufsteigende Blase verursacht wird, sodass während der Messphase eine Vielzahl von siedebedingten Geometrieänderungen erfassbar sind.

3. Verfahren nach dem vorhergehenden Anspruch, **dadurch gekennzeichnet, dass** die Messstrahlung in einer Messphase wenigstens ein Frequenzband mit einer Mehrzahl unterscheidbarer Frequenzen durchläuft, dass der Streuparameter in der Messphase als Funktion der Frequenz registriert wird und dass ein von einem stetigen Funktionsverlauf abweichender Funktionsverlauf des Streuparameters als ein Indiz für die Erkennung des Siedepunktes herangezogen wird.

4. Verfahren nach Anspruch 1, **dadurch gekennzeichnet, dass** der zeitliche Verlauf des Streuparameters über wenigstens zwei zeitversetzte Messphasen erfasst wird, deren Dauer jeweils gleich lang oder kürzer ist als eine Geometrieänderung der Flüssigkeit, die durch eine beim Sieden aufsteigende Blase verursacht wird, sodass während einer Messphase höchstens eine siedebedingte Geometrieänderung erfassbar ist.

5. Verfahren nach dem vorhergehenden Anspruch, **dadurch gekennzeichnet, dass** die Messstrahlung in den Messphasen jeweils wenigstens ein Frequenzband mit einer Mehrzahl unterscheidbarer Frequenzen durchläuft, dass der Streuparameter in den Messphasen als Funktion der Frequenz registriert wird und dass wenigstens eine charakteristische Abweichung der Streuparameter zu festgesetzten Frequenzen in den wenigstens zwei zeitversetzten Messphasen als ein Indiz für die Erkennung des Siedepunktes herangezogen wird.

6. Verfahren nach dem vorhergehenden Anspruch, **dadurch gekennzeichnet, dass** die charakteristische Abweichung der Funktionsverläufe durch wenigstens eine Differenz der Beträge der Streuparameter der jeweiligen Messphasen bestimmt wird.

7. Verfahren nach einem der drei vorhergehenden Ansprüche, **dadurch gekennzeichnet, dass** für die beiden Messphasen der Streuparameter an gegenläufigen Toren eines Zweitors oder Mehrtors in Transmission und/oder Reflexion zeitversetzt erfasst wird.

8. Verfahren nach Anspruch 1, **dadurch gekennzeichnet, dass** der zeitabhängige Verlauf des Streuparameters bei einer konstanten Frequenz erfasst wird und dass eine erhöhte Änderungsrate des Streuparameters als ein Indiz für die Erkennung des Siedepunktes herangezogen wird.

9. Verfahren nach dem vorhergehenden Anspruch, **dadurch gekennzeichnet, dass** die erhöhte Änderungsrate eine statistische Analyse oder eine Kurvenbetrachtung des zeitabhängigen Verlaufs des Streuparameters ermittelt wird.

10. Verfahren nach einem der drei vorhergehenden Ansprüche, **dadurch gekennzeichnet, dass** die Leistung der Messstrahlung so gewählt ist, dass sie gleichzeitig zur dielektrischen Erwärmung der Flüssigkeit und/oder des Lebensmittels führt

11. Verfahren nach einem der drei vorhergehenden Ansprüche, **dadurch gekennzeichnet** das die Amplitude und/oder der Betrag von mindestens einem Streuparameter erfasst wird und/oder die Anpassung und/oder Effizienz und/oder eine Größe, die sich unmittelbar aus dem Streuparameter/den Streuparametern ergibt.

12. Verfahren nach einem der vorhergehenden Ansprüche, **dadurch gekennzeichnet, dass** die Behandlungseinrichtung (2) in Abhängigkeit wenigstens eines Behandlungsprogramms durch wenigstens eine Steuereinrichtung (4) gesteuert wird und dass die Erkennung des Siedepunktes der Steuereinrichtung (4) mitgeteilt wird, sodass das Behandlungsprogramm unter Berücksichtigung des Siedepunktes angepasst werden kann.

**Claims**

1. Method for heating a liquid in a device (1) that comprises a treatment apparatus (2) which is equipped with a suitable heating source (22), wherein the method includes detecting a boiling point of the liquid, wherein

    - using a measuring system (3), high-frequency measurement radiation in the **range of an ISM band at 900 MHz or at 2.45 GHz** is emitted to the liquid and/or to a resonance chamber partially filled with liquid and is received again,
    - the time curve of a scattering parameter is determined from a comparison of the transmitted and the received measurement radiation in at least two measurements,
    - at least one value for a temporal change of the scattering parameter is determined and evaluated from the time curve of the scattering parameter,
    - and wherein a boiling point is detected when the value for the temporal change of the scattering parameter exceeds a predetermined value.

2. Method according to claim 1, **characterised in that** the time curve of the scattering parameter is detected over at least one measuring phase of which the duration is many times longer than a change in geometry of the liquid caused by a bubble rising during boiling, such that a large number of boiling-related changes in geometry can be detected during the measuring phase.

3. Method according to the preceding claim, **characterised in that** the measurement radiation passes through at least one frequency band having a plurality of distinguishable frequencies in one measuring phase, **in that** the scattering parameter is registered as a function of the frequency in the measuring phase, and **in that** a function curve of the scattering parameter deviating from a continuous function curve is used as an indication for detecting the boiling point.

4. Method according to claim 1, **characterised in that** the time curve of the scattering parameter is detected over at least two time-shifted measuring phases of which the duration is equal to or shorter than a change in geometry of the liquid caused by a bubble rising during boiling, such that at most one boiling-related change in geometry can be detected during a measuring phase.

5. Method according to the preceding claim, **characterised in that** the measurement radiation passes through at least one frequency band having a plurality of distinguishable frequencies in each of the measuring phases, **in that** the scattering parameter is registered as a function of the frequency in the measuring phases, and **in that** at least one characteristic deviation of the scattering parameters at set frequencies in the at least two time-shifted measuring phases is used as an indication for detecting the boiling point.

6. Method according to the preceding claim, **characterised in that** the characteristic deviation of the function curves is determined by at least one difference in the amounts of the scattering parameters of the respective measuring phases.

7. Method according to any of the three preceding claims, **characterised in that** , for the two measuring phases, the scattering parameter is detected in a time-shifted manner at contra-directional ports of a two-port or n-port network in transmission and/or reflection.

8. Method according to claim 1, **characterised in that** the time-dependent curve of the scattering parameter is detected at a constant frequency and **in that** an increased rate of change of the scattering parameter is used as an indication for detecting the boiling point.

9. Method according to the preceding claim, **characterised in that** the increased rate of change is determined by a statistical analysis or a curve analysis of the time-dependent curve of the scattering parameter.

**10.** Method according to any of the three preceding claims, **characterised in that** the power of the measurement radiation is selected such that it simultaneously leads to the dielectric heating of the liquid and/or the food.

**11.** Method according to any of the three preceding claims, **characterised in that** the amplitude and/or the amount of at least one scattering parameter, and/or the adjustment and/or efficiency and/or a variable which results directly from the scattering parameter(s), is detected.

**12.** Method according to any of the preceding claims, **characterised in that** the treatment apparatus (2) is controlled on the basis of at least one treatment program by at least one control apparatus (4) and **in that** the detection of the boiling point is communicated to the control apparatus (4) such that the treatment program can be adjusted taking into account the boiling point.

**Revendications**

**1.** Procédé de chauffage d'un liquide dans un appareil (1) comportant un dispositif de traitement (2) muni d'une source de chaleur (22) appropriée pour celui-ci, le procédé comprenant une détection d'un point d'ébullition du liquide,

- un rayonnement de mesure haute fréquence dans la **plage d'une bande ISM à 900 MHz ou à 2,45 GHz** étant émis au moyen d'un système de mesure (3) vers le liquide et/ou vers une chambre de résonance partiellement chargée de liquide, et reçu à nouveau,
- la variation temporelle d'un paramètre de diffusion étant déterminée à partir d'une comparaison du rayonnement de mesure émis avec le rayonnement de mesure reçu dans au moins deux mesures,
- au moins une valeur pour une variation temporelle du paramètre de diffusion étant déterminée et évaluée à partir de la variation temporelle du paramètre de diffusion,
- et un point d'ébullition étant détecté lorsque la valeur de la variation temporelle du paramètre de diffusion dépasse une valeur prédéterminée.

**2.** Procédé selon la revendication 1, **caractérisé en ce que** la variation temporelle du paramètre de diffusion est détectée sur au moins une phase de mesure, dont la durée est beaucoup plus longue qu'une modification de la géométrie du liquide causée par une bulle montant pendant l'ébullition, de sorte que, pendant la phase de mesure, une multitude de modifications de la géométrie liées à l'ébullition peut être détectée.

**3.** Procédé selon la revendication précédente, **caractérisé en ce que** le rayonnement de mesure traverse au moins une bande de fréquences avec une pluralité de fréquences distinctes dans une phase de mesure, **en ce que** le paramètre de diffusion est enregistré dans la phase de mesure en fonction de la fréquence, et **en ce qu'**une variation fonctionnelle du paramètre de diffusion qui s'écarte d'une variation fonctionnelle continue est utilisée comme indication pour la détection du point d'ébullition.

**4.** Procédé selon la revendication 1, **caractérisé en ce que** la variation temporelle du paramètre de diffusion est détectée sur au moins deux phases de mesure décalées dans le temps, dont chacune a une durée égale ou inférieure à une modification de la géométrie du liquide causée par une bulle montant pendant l'ébullition, de sorte que, pendant une phase de mesure, au plus une modification de la géométrie liée à l'ébullition peut être détectée.

**5.** Procédé selon la revendication précédente, **caractérisé en ce que** le rayonnement de mesure dans les phases de mesure traverse à chaque fois au moins une bande de fréquences avec une pluralité de fréquences distinctes, **en ce que** le paramètre de diffusion dans les phases de mesure est enregistré en fonction de la fréquence et **en ce qu'**au moins un écart caractéristique des paramètres de diffusion par rapport aux fréquences fixes dans les au moins deux phases de mesure décalées dans le temps est utilisé comme indication pour la détection du point d'ébullition.

**6.** Procédé selon la revendication précédente, **caractérisé en ce que** l'écart caractéristique des variations fonctionnelles est déterminé par au moins une différence des valeurs des paramètres de diffusion des phases de mesure respectives.

**7.** Procédé selon l'une des trois revendications précédentes, **caractérisé en ce que**, pour les deux phases de mesure, le paramètre de diffusion à des portes opposées d'un système à deux portes ou plus est détecté de manière décalée dans le temps en transmission et/ou en réflexion.

**8.** Procédé selon la revendication 1, **caractérisé en ce que** la variation dépendant du temps du paramètre de diffusion est détectée à une fréquence constante, et **en ce qu'**un taux de variation accru du paramètre de diffusion est utilisé comme indication pour la détection du point d'ébullition.

**9.** Procédé selon la revendication précédente, **caractérisé en ce que** le taux de variation accru est déterminé par une analyse statistique ou une observation d'une courbe de la variation dépendant du temps du paramètre de diffusion.

10. Procédé selon l'une des trois revendications précédentes, **caractérisé en ce que** la puissance du rayonnement de mesure est choisie de sorte qu'elle entraîne simultanément un chauffage diélectrique du liquide et/ou de la denrée alimentaire.

11. Procédé selon l'une des trois revendications précédentes, **caractérisé en ce que** l'amplitude et/ou la valeur d'au moins un paramètre de diffusion et/ou l'adaptation et/ou l'efficacité et/ou une valeur résultant directement du/des paramètre(s) de diffusion sont détectées.

12. Procédé selon l'une des revendications précédentes, **caractérisé en ce que** le dispositif de traitement (2) est commandé par au moins un dispositif de commande (4) en fonction d'au moins un programme de traitement, et **en ce que** la détection du point d'ébullition est communiquée au dispositif de commande (4) de sorte que le programme de traitement peut être adapté en fonction du point d'ébullition.

Fig. 1

Fig. 2

Fig. 3

Fig. 4

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2013033330 A2
- EP 2983453 A1

- EP 2193732 A1